# EUROPÄISCHE PATENTSCHRIFT

(11) **EP 0 423 733 B1**
(45) Veröffentlichungstag und Bekanntmachung des Hinweises auf die Patenterteilung: **17.08.1994**
(21) Anmeldenummer: 90119849.9
(22) Anmeldetag: 16.10.1990
(51) Int. Cl.: H04M 1/72

(54) **Vorrichtung zur Ablage eines Mobilteils eines Schnurlos- oder Mobiltelefons**
Support device for the mobile unit of a cordless or mobile telephone
Dispositif de support pour l'unité mobile d'un téléphone sans fil ou mobile

(30) Priorität: 19.10.1989 AT 2402/89
(43) Veröffentlichungstag der Anmeldung: 24.04.1991
(73) Patentinhaber: Siemens Aktiengesellschaft Österreich, 1210 Wien (AT)
(72) Erfinder: Forer, Josef, Dipl.-Ing., A-1060 Wien (AT)
(74) Vertreter: Atzwanger, Richard, Dipl.-Ing. Patentanwalt

(56) Entgegenhaltungen:
- EP-A- 0 074 319
- EP-A- 0 176 104
- EP-A- 0 176 855
- EP-A- 0 178 393
- EP-A- 0 185 138
- DE-A- 3 736 608
- GB-A- 2 230 922

## Beschreibung

Die Erfindung betrifft eine Vorrichtung zur Ablage eines Mobilteils eines Schnurlos- oder Mobiltelefons, wobei im Mobilteil ein Wahlprozessor und in der Ablagevorrichtung mindestens eine Zusatzeinrichtung zur Kopplung mit dem Mobilteil enthalten ist, wobei die Kopplung zwischen Mobilteil und Zusatzeinrichtung als Übertragungseinrichtung von Daten und/oder Sprache in beiden Richtungen ausgebildet ist.

Eine derartige Vorrichtung ist aus der EP 313 776 bekannt. Diese Ablagevorrichtung für den Mobilteil eines Schnurlos-Telefons ist so ausgestattet, daß die Wähltasten bei abgelegtem Mobilteil zugänglich bleiben. Darüberhinaus erfolgt durch diese Ablagevorrichtung das Nachladen der Akkumulatoren des Mobilteils. Über zusätzliche Kontakte oder eine induktive Koppeleinrichtung ist darüberhinaus eine Freisprecheinrichtung mit dem Mobilteil verbunden.

Der Erfindung liegt die Aufgabe zugrunde, für den Benutzer von Schnur-Telefonen übliche Zusatzeinrichtungen auch bei Funktelefonen zur Verfügung zu stellen.

Dies wird erfindungsgemäß dadurch erreicht, daß eine Zusatzeinrichtung einen Mikrocomputer enthält, der über einen Datenbus mit dem Wahlprozessor des Mobilteils verbunden ist.

Da Ablagevorrichtungen netzgespeist sind und von der Gehäusegröße her keinen Einschränkungen unterliegen, können nunmehr verschiedene Zusatzeinrichtungen angeschlossen werden, die bei Funktelefonen aufgrund der beschränkten Gehäusegröße für den Mobilteil nicht möglich waren. Die tragbaren Geräte bleiben handlich und übersichtlich, beim stationären Gebrauch muß nicht mehr auf Komfort verzichtet werden. Der Bedarf für Ablagevorrichtungen ist für alle Schnurlos-Telefone gegeben, bei Mobiltelefonen insbesondere für kleine, handliche Geräte mit geringer Sende/Empfangsleistung.

Zur besseren Bedienbarkeit ist es vorteilhaft, daß eine Zusatzeinrichtung einen Mikrocomputer enthält, der über einen Datenbus mit dem Wahlprozessor des Mobilteils verbunden ist. Wenn diese Zusatzeinrichtung eine Zielrufvorrichtung ist, können bei abgelegtem Mobilteil eine, den Tasten der Zielrufvorrichtung entsprechende Anzahl von Teilnehmern durch einen einzigen Tastendruck angewählt werden. Beim Anschluß des Schnurlos- oder Mobiltelefons an eine Nebenstellenanlage oder ein digitalisiertes öffentliches Vermittlungsnetz ist es vorteilhaft, daß diese Zusatzeinrichtung Anwählvorrichtungen für Telefon-Leistungsmerkmale enthält. Dadurch wird die Nutzung von Leistungsmerkmalen wie beispielsweise für Rückfrage, Gesprächsweitergabe, Dreierkonferenz, selbsttätige Rufwiederholung und Anrufumleitung möglich.

Das Telefonieren mit Schnurlos- oder Mobiltelefonen wird dadurch erleichtert, daß eine Zusatzeinrichtung ein Tastwahlblock ist. Das Wählen einer Telefonnummer kann durch größere Tasten, als bei Mobilteilen üblich, erleichtert werden. Um jederzeit erreichbar bzw. zeitweise ungestört zu sein, ist es vorteilhaft, daß eine Zusatzeinrichtung ein Anrufbeantworter ist. Zur Unterstützung des akustischen Rufsignals ist eine Zusatzeinrichtung eine optische Rufsignalvorrichtung. Insbesondere für größere Wohneinheiten ist es vorteilhaft, daß eine Zusatzeinrichtung ein Rufverstärker ist. Der oftmalige Austausch des Akkumulators des Mobilteils wird dadurch erspart, daß eine von mehreren Zusatzeinrichtungen eine Ladestation für den Akkumulator des Mobilteils und/oder eine Freisprecheinrichtung ist. Damit muß beim Telefonieren eine manuelle Tätigkeit nicht mehr unterbrochen werden.

Die Übertragung der notwendigen Informationen bei der Kopplung des Mobilteils mit einer oder mehreren Zusatzeinrichtungen kann auf verschiedene Arten erfolgen. Es wird keine Funkkanalkapazität benötigt, wenn die Übertragunseinrichtung eine Infrarot-Sende/Empfangsvorrichtung ist. Ein Mobilteil muß nicht unmittelbar auf der Ablagevorrichtung aufliegen, wenn die Übertragungseinrichtung eine Funk-Sende/Empfangsvorrichtung ist. Da der Informationsaustausch über eine sehr geringe Distanz erfolgt, kann die Sendeleistung gering gehalten werden. Eine wenig störanfällige Übertragung wird dadurch erreicht, daß die Übertragunseinrichtung eine UHF-Sende/Empfangsvorrichtung ist. Beim direkten Auflegen des Mobilteils auf die Ablagevorrichtung ist es möglich, daß die Übertragunseinrichtung eine induktive Übertragungsvorrichtung ist. Eine preisgünstige und störsichere Lösung wird dadurch erreicht, daß die Übertragungseinrichtung eine mechanische Kontaktiervorrichtung ist.

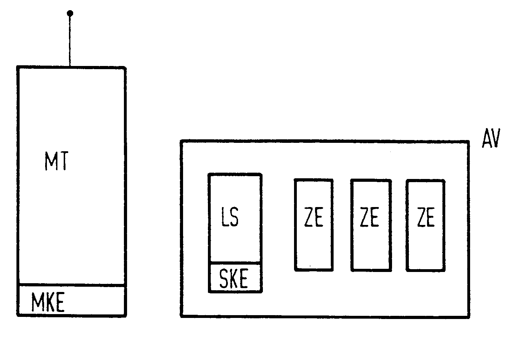

Die Erfindung wird anhand eines Ausführungsbeispieles und einer Zeichnung näher erläutert. Die Figur zeigt das Ausführungsbeispiel schematisch.

In der Figur ist ein Mobilteil MT eines Schnurlos-Telefons dargestellt. In den Mobilteil MT ist eine mobile Koppeleinrichtung MKE als Teil einer Übertragungseinrichtung eingebaut. Die mobile Koppeleinrichtung MKE enthält außer Ladekontakten für einen eingebauten Akkumulator auch noch eine mehrpolige Steckbuchse zur Daten- und Sprachübertragung. Das Gegenstück zur mobilen Koppeleinrichtung MKE ist als stationäre Koppeleinrichtung SKE am unteren Ende einer Ladeschale LS einer Ablagevorrichtung AV angebracht. Die stationäre Koppeleinrichtung SKE enthält außer den beiden Ladekontakten einen mehrpoligen Stecker, über den die Verbindung des Mobilteils MT zu Zusatzeinrichtungen ZE der Ablagevorrichtung AV hergestellt wird. Die Steckvorrichtung kann gegebenenfalls durch eine Infrarot-Sende/Empfangsvorrichtung, eine UHF-Sende/Emfpangsvorrichtung oder eine induktive Übertragungsvorrichtung ersetzt werden.

Neben der Ladeschale LS sind drei weitere Zusatzeinrichtungen ZE vorhanden. Deren Verbindung zum Mobilteil MT wird über eine Vierweg-Niederfrequenz-Strecke hergestellt. Sie besteht aus einer Mikrophon- und einer Hörkapselleitung, einer Leitung für den Gabelumschalter und einer Schnittstelle zum Wahlprozessor des Mobilteils MT. Im Falle einer drahtlosen Verbindung wird die Strecke über geeignete Modulationsverfahren hergestellt. Als Zusatzeinrichtungen ZE sind ein Anrufbeantworter, eine Zielrufvorrichtung und eine Freisprecheinrichtung vorhanden. Ein Mikrocomputer der Zielrufvorrichtung ist mit dem Wahlprozessor des Mobilteils MT gekoppelt.

Somit ist es bei abgelegtem Mobilteil MT möglich, wie bei einem Komfort-Telefonapparat an der Ablagevorrichtung AV eine Zieltaste zu drücken. Von der Zielrufvorrichtung aus wird die Verbindung mit dem Wahlprozessor des Mobilteils MT aufgebaut und die automatische Wahl durchgeführt. Nach dem Melden des Teilnehmers wird über die Freisprecheinrichtung gesprochen.

## Patentansprüche

1. Vorrichtung ohne Anschluß an das Fernsprechnetz zur Ablage eines Mobilteils (MT) eines Schnurlos- oder Mobiltelefons, wobei im Mobilteil (MT) ein Wahlprozessor und in der Ablagevorrichtung (AV) mindestens eine Zusatzeinrichtung (ZE) zur Kopplung mit dem Mobilteil (MT) enthalten ist, wobei die Kopplung zwischen Mobilteil (MT) und Zusatzeinrichtung (ZE) als Übertragungseinrichtung von Daten und/oder Sprache in beiden Richtungen ausgebildet ist, **dadurch gekennzeichnet,** daß eine Zusatzeinrichtung (ZE) einen Mikrocomputer enthält, der über einen Datenbus mit dem Wahlprozessor des Mobilteils (MT) verbunden ist.

2. Vorrichtung nach Anspruch 1, **dadurch gekennzeichnet,** daß diese Zusatzeinrichtung (ZE) eine Zielrufvorrichtung ist.

3. Vorrichtung nach Anspruch 1 oder 2, **dadurch gekennzeichnet,** daß diese Zusatzeinrichtung (ZE) Anwählvorrichtungen für Telefon-Leistungsmerkmale enthält.

4. Vorrichtung nach einem der vorherigen Ansprüche, **dadurch gekennzeichnet,** daß eine Zusatzeinrichtung (ZE) ein Tastwahlblock ist.

5. Vorrichtung nach einem der vorherigen Ansprüche, **dadurch gekennzeichnet,** daß eine Zusatzeinrichtung (ZE) ein Anrufbeantworter ist.

6. Vorrichtung nach einem der vorherigen Ansprüche, **dadurch gekennzeichnet,** daß eine Zusatzeinrichtung (ZE) eine optische Rufsignalvorrichtung ist.

7. Vorrichtung nach einem der vorherigen Ansprüche, **dadurch gekennzeichnet,** daß eine Zusatzeinrichtung (ZE) ein Rufverstärker ist.

8. Vorrichtung nach einem der vorherigen Ansprüche, **dadurch gekennzeichnet,** daß eine von mehreren Zusatzeinrichtungen (ZE) eine Ladestation für den Akkumulator des Mobilteils (MT) und/oder eine Freisprecheinrichtung ist.

9. Vorrichtung nach einem der vorherigen Ansprüche, **dadurch gekennzeichnet,** daß die Übertragungseinrichtung eine Infrarot-Sende/Empfangsvorrichtung ist.

10. Vorrichtung nach einem der Ansprüche 1 - 9, **dadurch gekennzeichnet,** daß die Übertragungseinrichtung eine Funk-Sende/Empfangsvorrichtung ist.

11. Vorrichtung nach Anspruch 10, **dadurch gekennzeichnet,** daß die übertragungseinrichtung eine UHF-Sende/Empfangsvorrichtung ist.

12. Vorrichtung nach einem der Ansprüche 1 - 9, **dadurch gekennzeichnet,** daß die Übertragunseinrichtung eine induktive Übertragungsvorrichtung ist.

13. Vorrichtung nach einem der Ansprüche 1 - 9, **dadurch gekennzeichnet,** daß die Übertragungseinrichtung eine mechanische Kontaktiervorrichtung ist.

## Claims

1. Device without a connection to the telephone system, for placing a mobile part (MT) of a cordless or mobile telephone, wherein contained in the mobile part (MT) there is a selector processor and in the placing device (AV) at least one additional device (ZE) for coupling to the mobile part (MT), wherein the coupling is formed between the mobile part (MT) and an additional device (ZE) as transmission device of data and/or language in both directions, characterised in that an additional device (ZE) contains a microcomputer, which is connected by way of a data bus to the selector processor of the mobile part (MT).

2. Device according to claim 1, characterised in that this additional device (ZE) is a target call device.

3. Device according to claim 1 or 2, characterised in that this additional device (ZE) contains selection devices for active telephone features.

4. Device according to one of the preceding claims, characterised in that an additional device (ZE) is a key selection block.

5. Device according to one of the preceding claims, characterised in that an additional device (ZE) is a telephone answering machine.

6. Device according to one of the preceding claims, characterised in that an additional device (ZE) is an optical call signal device.

7. Device according to one of the preceding claims, characterised in that an additional device (ZE) is a call amplifier.

8. Device according to one of the preceding claims, characterised in that one of several additional devices (ZE) is a charging station for the accumulator of the mobile part (MT) and/or a free-speaking device.

9. Device according to one of the preceding claims, characterised in that the transmission device is an infrared transmitter/receiver device.

10. Device according to one of claims 1 - 9, characterised in that the transmission device is a radio transmitter/receiver device.

11. Device according to claim 10, characterised in that the transmission device is a UHF-transmitter/receiver device.

12. Device according to one of claims 1-9, characterised in that the transmission device is an inductive transmission device.

13. Device according to one of claims 1-9, characterised in that the transmission device is a mechanical contacting device.

## Revendications

1. Dispositif, sans connexion au réseau téléphonique, pour la dépose d'une partie mobile (MT) d'un téléphone sans fil mobile, dans cette partie mobile (MT) étant incorporé un processeur de numérotation et dans le dispositif de dépose (AV) étant incorporé au moins un dispositif complémentaire (ZE) pour l'accouplement à ladite partie mobile (MT), cet accouplement entre la partie mobile (MT) et le dispositif complémentaire (ZE) étant réalisé sous la forme d'un dispositif de transfert bidirectionnel de données et/ou de la parole, caractérisé en ce qu'un dispositif complémentaire (ZE) contient un micro-ordinateur qui est relié par un bus de données au processeur de numérotation de la partie mobile (MT).

2. Dispositif selon la revendication 1, caractérisé en ce que ce dispositif complémentaire (ZE) est un dispositif d'appels ciblés.

3. Dispositif selon la revendication 1 ou 2, caractérisé en ce que ce dispositif complémentaire (ZE) contient des dispositifs de sélection de prestations spéciales offertes par l'administration des télécommunications.

4. Dispositif selon l'une des revendications précédentes, caractérisé en ce qu'un dispositif complémentaire (ZE) est un bloc de numérotation à touches.

5. Dispositif selon l'une des revendications précédentes, caractérisé en ce qu'un dispositif complémentaire (ZE) est un répondeur téléphonique.

6. Dispositif selon l'une des revendications précédentes, caractérisé en ce qu'un dispositif complémentaire (ZE) est un dispositif de signalisation optique des appels.

7. Dispositif selon l'une des revendications précédentes, caractérisé en ce qu'un dispositif complémentaire (ZE) est un amplificateur de la sonnerie d'appel.

8. Dispositif selon l'une des revendications précédentes, caractérisé en ce que l'un des dispositifs d'appel (ZE) est un chargeur pour l'accumulateur de la partie mobile (MT) et/ou un combiné à mains libres.

9. Dispositif selon l'une des revendications précédentes, caractérisé en ce que le dispositif de transfert est un émetteur/récepteur à infrarouges.

10. Dispositif selon l'une des revendications précédentes 1 à 9, caractérisé en ce que le dispositif de transfert est un émetteur/récepteur radio.

11. Dispositif selon la revendication 10, caractérisé en ce que le dispositif de transfert est un émetteur/récepteur à UHF (Ultra Haute Fréquence).

12. Dispositif selon l'une des revendications précédentes 1 à 9, caractérisé en ce que le dispositif de transfert est un dispositif de transfert inductif.

13. Dispositif selon l'une des revendications précédentes 1 à 9, caractérisé en ce que le dispositif de transfert est un dispositif à contacts mécaniques.
